(19) **Europäisches Patentamt**
**European Patent Office**
**Office européen des brevets**

(11) **EP 2 117 141 B1**

(12) **EUROPEAN PATENT SPECIFICATION**

(45) Date of publication and mention
of the grant of the patent:
**22.06.2011 Bulletin 2011/25**

(51) Int Cl.:
**H04B 17/00** *(2006.01)*

(21) Application number: **09159783.1**

(22) Date of filing: **08.05.2009**

(54) **Method and apparatuses for signal strength indication**

Verfahren und Vorrichtungen zur Signalstärkenanzeige

Procédé et dispositifs pour indiquer la force d'un signal

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **10.05.2008 US 52190 P**

(43) Date of publication of application:
**11.11.2009 Bulletin 2009/46**

(73) Proprietor: **RESEARCH IN MOTION LIMITED
Waterloo, Ontario N2L 3W8 (CA)**

(72) Inventor: **Farnsworth, Andrew
Birmingham, West Midlands, B1 2RA (GB)**

(74) Representative: **Barrett, Peter Andrew John et al
Kilburn & Strode LLP
20 Red Lion Street
London WC1R 4PJ (GB)**

(56) References cited:
**EP-A1- 1 686 816       US-A1- 2004 102 167
US-A1- 2004 229 659     US-A1- 2006 068 731
US-A1- 2008 082 180**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

This application relates to telecommunication systems in general, having for example application in UMTS (Universal Mobile Telecommunications System) and in particular relates to a method and apparatus for signal strength indication.

BACKGROUND

In a typical cellular radio system, mobile user equipment (UE) communicates via a radio access radio network (RAN) to one or more core networks. User equipment (UE) comprises various types of equipment such as mobile telephones (also known as cellular or cell phones), laptops with wireless communication capability, personal digital assistants (PDAs) etc. These may be portable, hand held, pocket sized, installed in a vehicle etc. and communicate voice and/or data signals with the radio access network.

In the following, reference will be made to UMTS and to particular standards. However it should be understood that this disclosure is not intended to be limited to any particular mobile telecommunications system or standard.

The radio access network covers a geographical area divided into a plurality of cell areas. Each cell area is served by at least one base station, which in UMTS may be referred to as a Node B. Each cell is identified by a unique identifier which is broadcast in the cell. The base stations communicate at radio frequencies over an air interface with the UEs within range of the base station. Several base stations may be connected to a radio network controller (RNC) which controls various activities of the base stations. The radio network controllers are typically connected to a core network.

UMTS. is a third generation public land mobile telecommunication system. Various standardization bodies are known to publish and set standards for UMTS, each in their respective areas of competence. For instance, the 3GPP (Third Generation Partnership Project) has been known to publish and set standards for GSM (Global System for Mobile Communications) based UMTS, and the 3GPP2 (Third Generation Partnership Project 2) has been known to publish and set standards for CDMA (Code Division Multiple Access) based UMTS. Within the scope of a particular standardization body, specific partners publish and set standards in their respective areas.

[0005a] US 2008/0082180 describes a method and device for reducing power consumption and bandwidth requirements in the transmission of a monitored parameter to, for example, a monitoring application. In particular, new monitoring parameter values are only transmitted if the difference between a measured or calculated parameter value and the most recently transmitted value exceeds a limit.

[0005b] US 2004/0229659 describes a method for reducing current drain in a communication device including: developing a history of readings of received signal strength: monitoring a received signal strength during a wake up period; determining whether the received signal strength is substantially stable with respect to the history of readings; and skipping the monitoring of the received signal strength for at least one of the subsequent wake up periods if the received signal strength is substantially stable with respect to the history of readings.

BRIEF DESCRIPTION OF THE DRAWINGS

Embodiments will now be described, by way of example only, with reference to the attached drawings, in which:

Figure 1 is a schematic diagram showing an overview of a network and a UE;

Figure 2 is a flow diagram showing, at a high level, actions performed by the UE for reporting values of signal strength;

Figure 3 is a flow diagram showing, at a high level, alternative actions performed by the UE for reporting values of signal strength;

Figure 4 is a flow diagram showing, at a high level, further alternative actions performed by the UE for reporting values of signal strength;

Figures 5A and 5B show a table and a graph respectively of filtered values of current signal strength where a parameter a is equal to 0.5;

Figures 6A and 6B show a table and a graph respectively of filtered values of current signal strength where a parameter a is equal to 0.8; and

Figure 7 is a block diagram illustrating a mobile device, which can act as a UE in accordance with the approach described herein.

DETAILED DESCRIPTION OF THE DRAWINGS

Consider a wireless communications device, generally referred to as user equipment (UE), which complies with the 3GPP specifications for the UMTS protocol. Typically a wireless communications device has a display for displaying information to the user about the operation of the device. An aspect of the information displayed comprises an indication of signal strength, usually a graphical representation able to show relative signal strengths. The graphical representation allows the user to make an assessment of the quality of service to expect when using the device at a particular time and location. For example, if a user is expecting to receive a call but the graphical representation shows no communication service is available or indicates only intermittent communication service is available, then the user may choose to reposition the wireless communications device to a location where a better service can be obtained. Similarly, if a user wishes to download a large data file using the wireless communications device, the user may attempt to find a location for the wireless communications device where a strong signal from the communication service can be established before attempting to download the data file such that the download can proceed more quickly.

Current wireless communications devices may be in a location where a weak signal is shown as being received, based on an inaccurate signal strength indicator as measured in the UE, but the UE is unable to establish a communication link with the wireless communications network. If a user of such a wireless communications device is expecting a call or is attempting to obtain a communication service from the wireless communications network for any other reason, the user may find their attempts frustrated despite the indication that measurable signal strength exists. The result is a misleading representation of signal strength, in the sense that it misleads the user of a wireless communications device as to the device's ability to communicate. Accordingly, there is a need for more accurate signal strength measures.

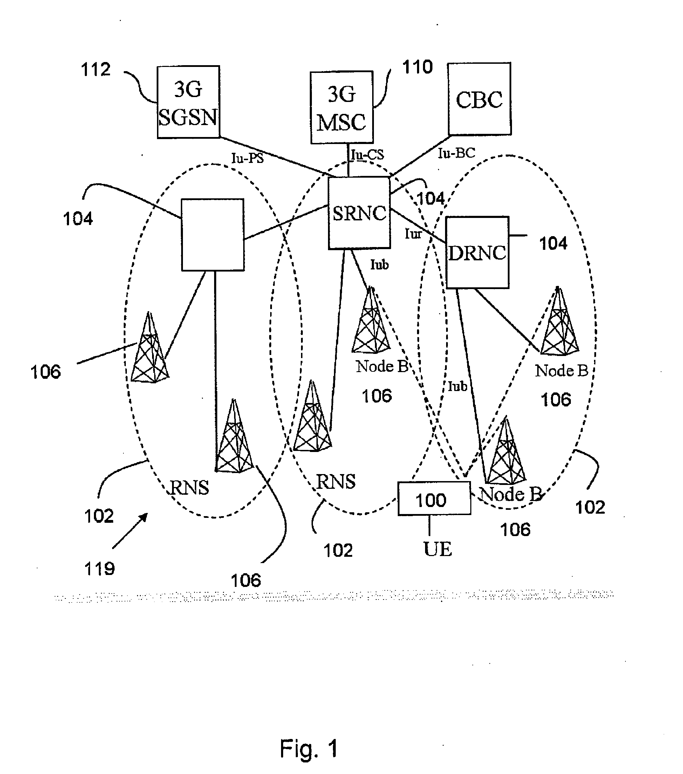

The method disclosed herein may be implemented according to claim 1 in a user equipment device of a wireless communications network. Furthermore, the invention may be implemented in apparatuses according to claim 17 and 18. Referring to the drawings, Figure 1 is a schematic diagram showing an overview of a network and a user equipment device. Clearly in practice there may be many user equipment devices operating with the network but for the sake of simplicity Figure 1 only shows a single user equipment device 100. For the purposes of illustration, Figure 1 also shows a radio access network 119 (UTRAN) used in a UMTS system having a few components. It will be clear to a person skilled in the art that in practice a network will include far more components than those shown.

The network 119 as shown in Figure 1 comprises three Radio Network Subsystems (RNS) 102. Each RNS has a Radio Network Controller (RNC) 104. Each RNS 102 has one or more Node B 102 which are similar in function to a Base Transmitter Station of a GSM radio access network. User Equipment UE 100 may be mobile within the radio access network. Radio connections (indicated by the straight dotted lines in Figure 1) are established between the UE and one or more of the Node Bs in the UTRAN.

Signal strength can be measured in a variety of ways by a UE operating in a UMTS system. Received Signal Strength Indicator (RSSI), Received Signal Code Power (RSCP) and Ec/No are among the measurables that can be used as a basis for determining signal strength.

RSSI gives a measure of the strength of a signal being received at a particular frequency. This is quick to measure, but does not compensate for interference. It is possible to have a high RSSI value measured on a particular frequency where there is actually no cell available for communication on that frequency, because the received signal strength is primarily noise.

RSCP is the received power on one code measured on the Primary Common Pilot Channel (Primary CPICH). The reference point for the RSCP is the antenna connector of the UE. If transmit diversity is applied on the Primary CPICH, the received code power from each antenna is typically separately measured and summed together to obtain a total received code power on the Primary CPICH. If receiver diversity is in use by the UE, the measured CPICH RSCP value is not lower than the corresponding CPICH RSCP of any of the individual received antenna branches.

Ec/No is a measure of signal strength obtained by dividing RSCP by RSSI. A problem with using Ec/No as a signal strength indicator is that when moving away from the edge of a UMTS network both the RSCP and RSSI decrease at similar rates. The result is that Ec/No can remain substantially constant although the quality of service available continues to decrease.

In the method and apparatus disclosed herein, RSCP is used as a basis for the measure of signal strength. In particular, in DCH, for each measurement the highest instantaneous CPICH RSCP of the active set cells is taken as a raw measurement. In non-DCH, each measurement of the CPICH RSCP of the serving cell is taken as a raw measurement. In general, the value of signal strength is measured, when the wireless communications device can communicate with a wireless communications network, as the RSCP for the cell the wireless communications device is in communication with having the highest instantaneous value of CPICH RSCP.

In operation, the UE reports a signal strength indicator from a measurement block or module to a network block or module. Both the measurement block or module and the network block or module are implemented in the UE. Both the measurement and network blocks or modules may be implemented in hardware, in software, or a mixture of hardware and software.

The network block makes the signal strength indicator available to applications. One such application is the application that uses the signal strength indicator to generate and display, at the user interface of the UE, a visual indicator of signal strength. This visual indicator may be in the form of a set of bars (a form of bar chart), but also includes any representation that visually indicates variations in signal strength.

When certain conditions are met, the measurement block, of its own accord, sends the latest results or latest processed results of signal strength measurements to the network block. The processed results may be the filtered results of either the CPICH RSCP of the serving cell or the best active set cell. The value, or set of values, representing measurements that are received or used, processed, and sent by the measurement block may be called a signal strength indicator. In one embodiment the reporting range for the signal strength indicator is -110 to -40 dBm, and values outside of this range are clipped to this range.

A responsibility of the network block is to forward a signal strength indicator to the non-access stratum (which is part of the wireless communication network). When the network block reports out of service to the non-access stratum, it also reports a signal level indicator.

A responsibility of the measurement block is to send an unprompted signal strength indicator when any one of the following conditions is met:

> 1) First camp on a UMTS cell following a camp request from the non-access stratum
> 2) Cell reselection from GSM to UMTS
> 3) Hard handover from GSM to UMTS
> 4) Cell change order from GSM to UMTS
> 5) Signal strength level changes by +/- 3 dBm

It is possible to arrange the measurement block to trigger the sending of signal strength indication whenever there is a change of the cell used for signal strength reporting. But such an implementation may exhibit problems. For example, the non-access stratum will not get an unprompted signal strength indicator if the UE ends up camping on the same cell in response to a camp request from the non-access stratum. So requirement 1) is not always fulfilled. That is, the UE would fail to send a signal strength indicator to the non-access stratum if the UE went out of service and then returns to the same cell following a PLMN search request from the non-access stratum. Another problem is that the above approach triggers sending of a signal strength indicator in scenarios other than when conditions 1) to 5) are met. For example, the measurement block will send a signal strength indicator whenever there is a cell reselection, which is not required by the non-access stratum.

An improved approach is to include a signal information element, the element being part of a collection or set of data being sent to the communications network by the UE, which contains the last signal strength indicator reported to the network block. The signal information element is initialized as absent. It will also be set to absent when: the UE initiates a move to a different radio access technology; or the measurement block receives a cell search request from the network block. In this approach, the measurement block sends an unprompted signal strength indicator when any one of the following conditions is fulfilled:

- the measurement block receives intrafrequency measurement results from layer 1 for cell reselection measurement and the signal information element is absent; or
- the filtered CPICH RSCP for signal strength reporting is 3 dBm or more different to the last reported signal strength.

Filtering is implemented in order to reduce the affect of noise on the number of reported signal strength indicator values reported to the network block. Filtering is performed across events for which a step change may be expected. For example if a cell reselection is performed by the UE, or the UE transitions into or out of DCH, the strength of the cells before and after may be significantly different, but the change is filtered none-the-less. This results in reduced complexity of the implemented system. The filtering algorithm used is:

$$F_n = (1-a) \cdot F_{n-1} + a \cdot Rscp$$

where $F_n$ is the updated filtered measurement result, $F_{n-1}$ is the previous filtered measurement result, and $Rscp$ is the most recently received or retrieved RSCP value. For the first filtered result, $F_n = Rscp$, because no value has been previously reported to the network block, so there is no value for $F_{n-1}$.

In non-discontinuous reception, $a = 0.5$. Where discontinuous reception (DRX) is implemented, the value of $a$ depends on the DRX cycle length as shown in the following table.

| DRX cycle length | Value of *a* |
|---|---|
| 80 ms | 0.6 |
| 160 ms | 0.7 |
| 330 ms | 0.8 |
| 640 ms | 0.9 |
| 1280 ms | 1 |
| 2560 ms | 1 |
| 5130 ms | 1 |

The choice of value *a* is a balance between presenting a smooth signal strength display and the timeliness of the display reflecting the actual signal strength. A more smoothed signal results in reduced likelihood of the signal strength application receiving too many signal strength indicator messages.

In the algorithm, *a* is dependent on how frequent the measurements are taken. The basic principal is that the shorter the measurement period, the lower weighting will be for the current measurement; the past results received not so long ago are used to smooth the variation of the signal strength display. If the measurement period is long, it is more important for the signal strength display to reflect the actual measured result more quickly as the previous measured results are quite old. Where the measurement period is long (around 1 second or more) *a* is set to be equal to or at least substantially equal to 1.

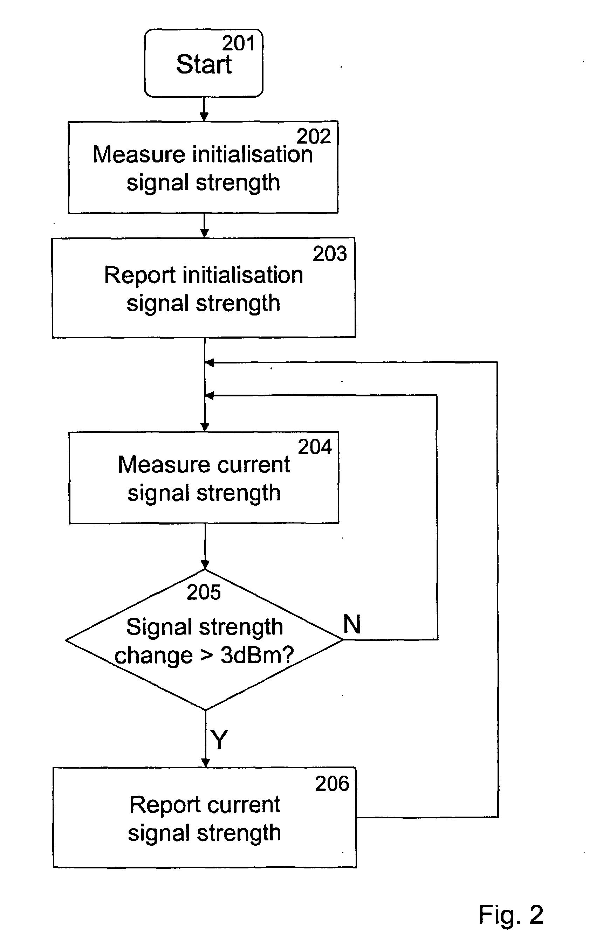

Figure 2 is a flow diagram showing, at a high level, actions performed by the UE for reporting values of signal strength. At 201 the UE begins monitoring signal strength. At 202 the UE measures an initial value of the signal strength, this is the initialization value of the signal strength and at 203 this is reported from a measurement block in the UE to a network block in the UE. At 204 the UE makes a current measurement of signal strength, and at 205 a determination is made as to whether this current value is different from the previously measured value by an amount greater than a threshold value of 3 dBm. If the current value is different from the previously measured value by an amount greater than a threshold value of 3 dBm, then the current signal strength is reported at 206 and the process goes back to taking a new measurement of current signal strength at 204. If the current value is not different from the previously measured value by an amount greater than a threshold value of 3 dBm, then the process goes back to taking a new measurement of current signal strength at 204 without reporting a value of signal strength. The process of figure 2 ends when the UE can no longer detect a signal, in which case the signal strength is undefined. In such a situation the signal strength indicator will show a no signal indication.

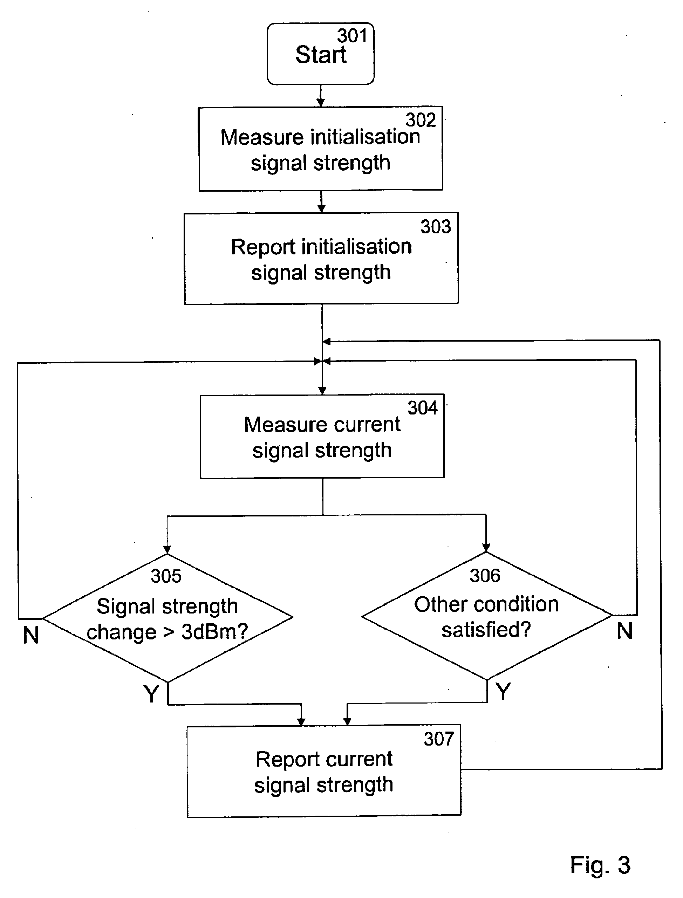

Figure 3 is a flow diagram showing, at a high level, alternative actions performed by the UE for reporting values of signal strength. At 301 the UE begins monitoring signal strength. At 302 the UE measures an initial value of the signal strength, this is the initialisation value of the signal strength and at 303 this is reported from a measurement block in the UE to a network block in the UE. At 304 the UE makes a current measurement of signal strength, and at 305 a determination is made as to whether this current value is different from the previously measured value by an amount greater than a threshold value of 3 dBm. If the current value is different from the previously measured value by an amount greater than a threshold value of 3 dBm, then the current signal strength is reported at 307 and the process goes back to taking a new measurement of current signal strength at 304. If the current value is not different from the previously measured value by an amount greater than a threshold value of 3 dBm, then the process goes back to taking a new measurement of current signal strength at 304 without reporting a value of signal strength.

At least one further determination 306 is made either before, after or in parallel with determination 305. At 306, it is determined whether another condition is satisfied. If the other condition is satisfied, then the current signal strength is reported at 307 and the process goes back to taking a new measurement of current signal strength at 304. If the other condition is not satisfied, then the process goes back to taking a new measurement of current signal strength at 304 without reporting a value of signal strength. The further determination 306 comprises an assessment of whether the following conditions are met:

- First camp on a UMTS cell following a camp request from the NAS;
- Cell reselection from GSM to UMTS;
- Hard handover from GSM to UMTS;
- Cell change order from GSM to UMTS; and
- Signal strength level changes +/- 3 dBm.

The process of figure 3 ends when the UE can no longer detect a signal, in which case the signal strength is undefined. In such a situation the signal strength indicator will show a no signal indication.

In an alternative method, the further determination 306 of figure 3 comprises a determination as to whether the measurement block has received an intrafrequency measurement result from layer 1 for cell reselection measurement and the signal information element is absent.

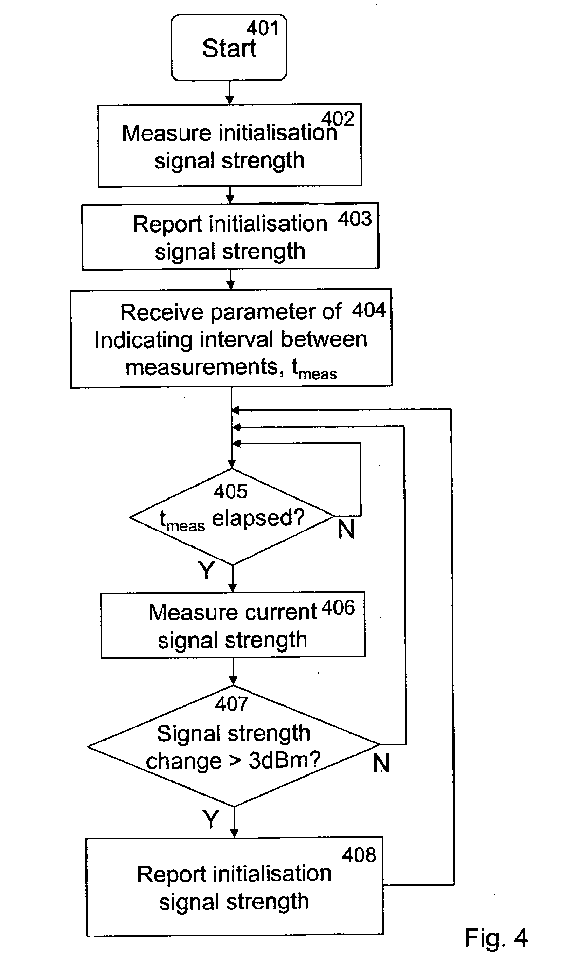

Figure 4 is a flow diagram showing, at a high level, actions performed by the UE for reporting values of signal strength. At 401 the UE begins monitoring signal strength. At 402 the UE measures an initial value of the signal strength, this is the initialisation value of the signal strength and at 403 this is reported from a measurement block in the UE to a network block in the UE. At 404 the UE receives a parameter $t_{meas}$ from the communication network. $t_{meas}$ indicates to the UE the interval between signal strength measurements. In an alternative, $t_{meas}$ is derived in the UE from another parameter obtained from the network. In another alternative, $t_{meas}$ is derived in the UE according to which communication state the UE is in.

At 405, the UE waits a period of time, $t_{meas}$. If $t_{meas}$ has elapsed then a measurement of a current value of signal strength is made at 406. At 407 a condition is assessed to determine whether the current value of signal strength should be reported. For the sake of brevity only one condition is shown in figure 4, that of whether the current value is different from the previously measured value by an amount greater than a threshold value of 3 dBm. If the condition is satisfied, then the current signal strength is reported at 408 and the process goes back to taking a new measurement of current signal strength at 405. If the condition is not satisfied, then the process goes back to taking a new measurement of current signal strength at 405 without reporting a value of signal strength.

The process of figure 4 ends when the UE can no longer detect a signal, in which case the signal strength is undefined. In such a situation the signal strength indicator will show a no signal indication.

In an alternative method, filtering of the current value of signal strength is implemented in conjunction with the process of figure 4. When filtering is implemented, measuring the current value of signal strength comprises measuring a raw value of signal strength and filtering the raw value of signal strength to obtain the current value of signal strength. The filtering of the raw value of signal strength comprises taking an average of the raw value of signal strength and a previously obtained filtered value of signal strength. The average is a weighted average using a weighting factor "a" as a multiplier of the raw value of signal strength and a weighting factor "1-a" as a multiplier of the previously obtained filtered value of signal strength.

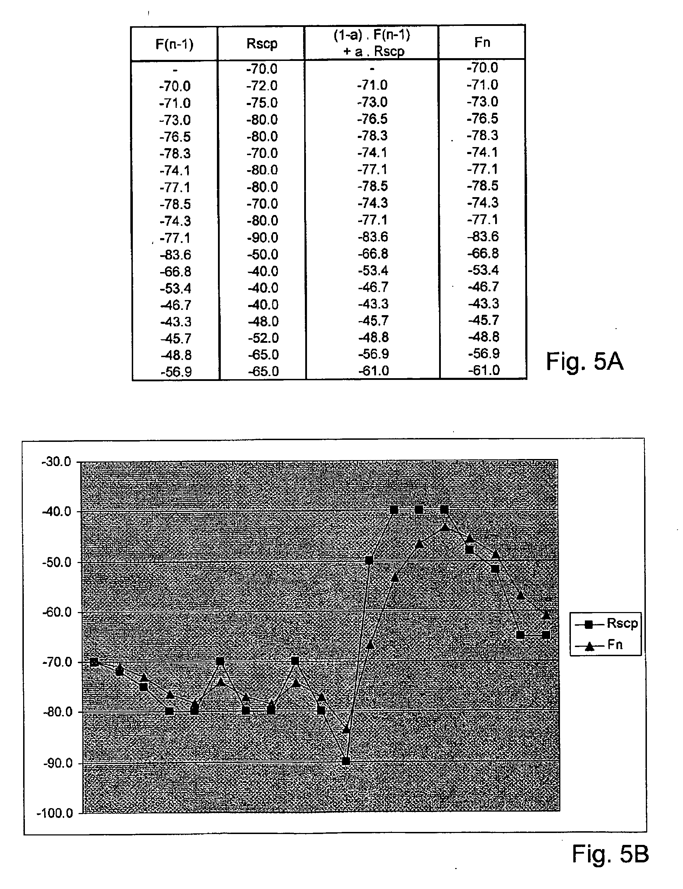

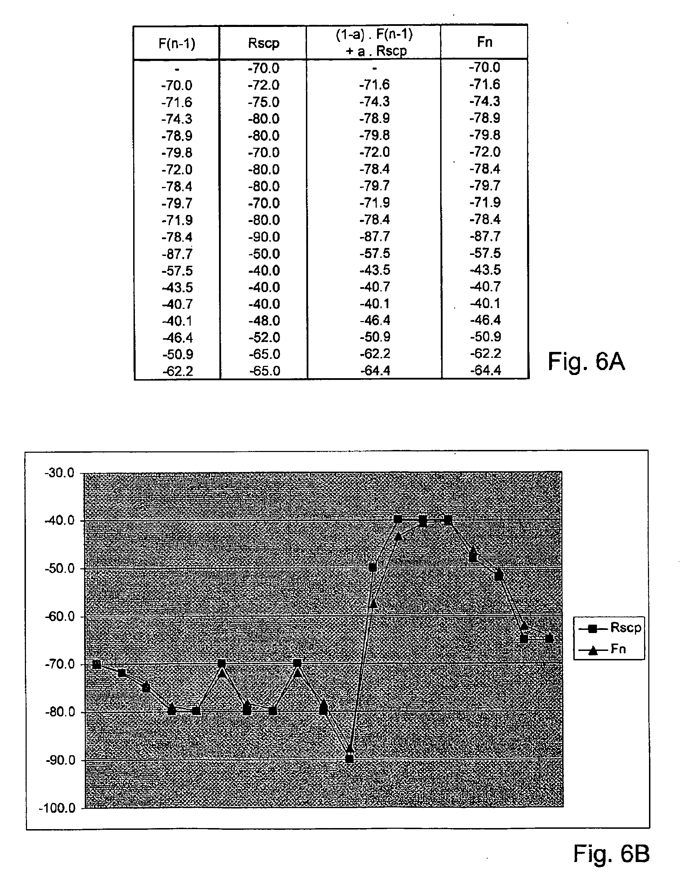

Figures 5A and 5B show a table and a graph respectively of filtered values of current signal strength where a parameter *a* is equal to 0.5. Figures 6A and 6B show a table and a graph respectively of filtered values of current signal strength where a parameter *a* is equal to 0.8. In general, the greater the time between measurements being taken (as dictated by $t_{meas}$ with reference to figure 4), the greater the value of *a.* A large value of *a* results in less influence of the preceding value on the weighted average and so less smoothing of the current value. Figures 5B and 6B are based upon the same series of the raw value of signal strength *(Rscp).* The value *a* is lower in figure 5B than 6B and so the filtered value of signal strength *(Fn)* follows variation of *Rscp* less closely in 5B than in 6B. Put another way, the filtered value of signal strength is smoothed more in figure 5B than in figure 6B.

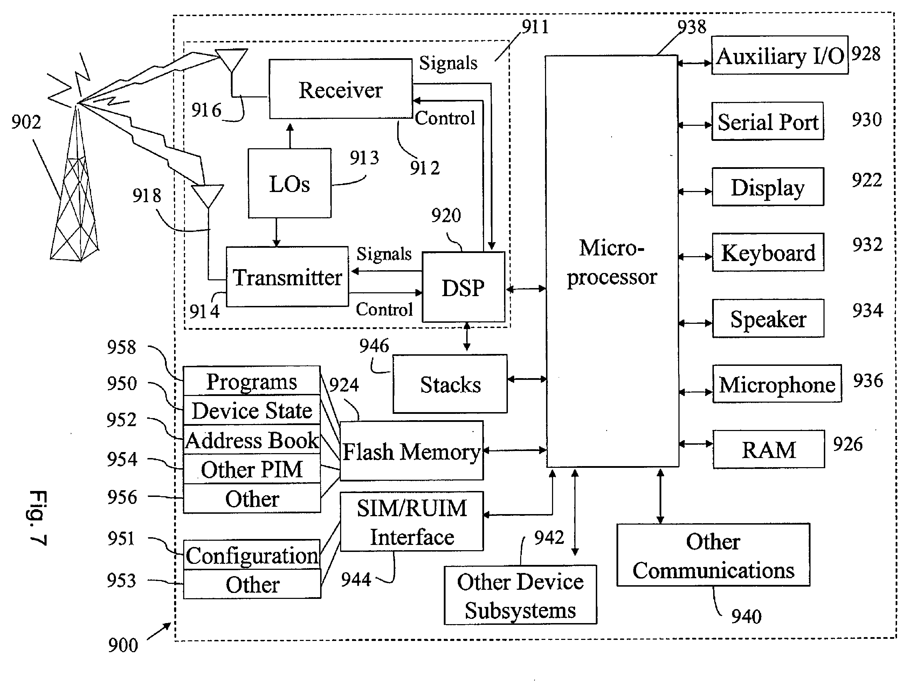

Turning now to Figure 7, this is a block diagram illustrating a mobile device, which can act as a UE and co-operate with the apparatus and methods of Figs. 1 to 6, and which is an exemplary wireless communication device. Mobile station 900 is preferably a two-way wireless communication device having at least voice and data communication capabilities. Mobile station 900 preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile station 900 is enabled for two-way communication, it will incorporate a communication subsystem 911, including both a receiver 912 and a transmitter 914, as well as associated components such as one or more, preferably embedded or internal, antenna elements 916 and 918, local oscillators (LOs) 913, and a processing module such as a digital signal processor (DSP) 920. As will be apparent to those skilled in the field of communications, the particular design of the communication subsystem 911 will be dependent upon the communication network in which the device is intended to operate. For example, mobile station 900 may include a communication subsystem 911 designed to operate within the Mobitex™ mobile communication system, the DataTAC™ mobile communication system, GPRS network, UMTS network, or EDGE network.

Network access requirements will also vary depending upon the type of network 902. For example, in the Mobitex and DataTAC networks, mobile station 900 is registered on the network using a unique identification number associated with each mobile station. In UMTS and GPRS networks, however, network access is associated with a subscriber or user of mobile station 900. A GPRS mobile station therefore requires a subscriber identity module (SIM) card in order to operate on a GPRS network. Without a valid SIM card, a GPRS mobile station will not be fully functional. Local or non-network communication functions, as well as legally required functions (if any) such as "911" emergency calling, may be available, but mobile station 900 will be unable to carry out any other functions involving communications over the network 902. The SIM interface 944 is normally similar to a card-slot into which a SIM card can be inserted and ejected like a diskette or PCMCIA card. The SIM card can have approximately 64K of memory and hold many key configuration 951, and other information 953 such as identification, and subscriber related information.

When required network registration or activation procedures have been completed, mobile station 900 may send and receive communication signals over the network 902. Signals received by antenna 916 through communication network 902 are input to receiver 912, which may perform such common receiver functions as signal amplification, frequency down conversion, filtering, channel selection and the like, and in the example system shown in Figure 7, analog to digital (A/D) conversion. A/D conversion of a received signal allows more complex communication functions such as demodulation and decoding to be performed in the DSP 920. In a similar manner, signals to be transmitted are processed, including modulation and encoding for example, by DSP 920 and input to transmitter 914 for digital to analog conversion, frequency up conversion, filtering, amplification and transmission over the communication network 902 via antenna 918. DSP 920 not only processes communication signals, but also provides for receiver and transmitter control. For example, the gains applied to communication signals in receiver 912 and transmitter 914 may be adaptively controlled through automatic gain control algorithms implemented in DSP 920.

Mobile station 900 preferably includes a microprocessor 938 which controls the overall operation of the device. Communication functions, including at least data and voice communications, are performed through communication subsystem 911. Microprocessor 938 also interacts with further device subsystems such as the display 922, flash memory 924, random access memory (RAM) 926, auxiliary input/output (I/O) subsystems 928, serial port 930, keyboard 932, speaker 934, microphone 936, a short-range communications subsystem 940 and any other device subsystems generally designated as 942.

Some of the subsystems shown in Figure 7 perform communication-related functions, whereas other subsystems may provide "resident" or on-device functions. Notably, some subsystems, such as keyboard 932 and display 922, for example, may be used for both communication-related functions, such as entering a text message for transmission over a communication network, and device-resident functions such as a calculator or task list.

Operating system software used by the microprocessor 938 is preferably stored in a persistent store such as flash memory 924, which may instead be a read-only memory (ROM) or similar storage element (not shown). Those skilled in the art will appreciate that the operating system, specific device applications, or parts thereof, may be temporarily loaded into a volatile memory such as RAM 926. Received communication signals may also be stored in RAM 926.

As shown, flash memory 924 can be segregated into different areas for both computer programs 958 and program data storage 950, 952, 954 and 956. These different storage types indicate that each program can allocate a portion of flash memory 924 for their own data storage requirements. Microprocessor 938, in addition to its operating system functions, preferably enables execution of software applications on the mobile station. A predetermined set of applications that control basic operations, including at least data and voice communication applications for example, will normally be installed on mobile station 900 during manufacturing. A preferred software application may be a personal information manager (PIM) application having the ability to organize and manage data items relating to the user of the mobile station such as, but not limited to, e-mail, calendar events, voice mails, appointments, and task items. Naturally, one or more memory stores would be available on the mobile station to facilitate storage of PIM data items. Such PIM application would preferably have the ability to send and receive data items, via the wireless network 902. In a preferred embodiment, the PIM data items are seamlessly integrated, synchronized and updated, via the wireless network 902, with the mobile station user's corresponding data items stored or associated with a host computer system. Further applications may also be loaded onto the mobile station 900 through the network 902, an auxiliary I/O subsystem 928, serial port 930, short-range communications subsystem 940 or any other suitable subsystem 942, and installed by a user in the RAM 926 or preferably a non-volatile store (not shown) for execution by the microprocessor 938. Such flexibility in application installation increases the functionality of the device and may provide enhanced on-device functions, communication-related functions, or both. For example, secure communication applications may enable electronic commerce functions and other such financial transactions to be performed using the mobile station 900.

In a data communication mode, a received signal such as a text message or web page download will be processed by the communication subsystem 911 and input to the microprocessor 938, which preferably further processes the received signal for output to the display 922, or alternatively to an auxiliary I/O device 928. A user of mobile station 900 may also compose data items such as email messages for example, using the keyboard 932, which is preferably a complete alphanumeric keyboard or telephone-type keypad, in conjunction with the display 922 and possibly an auxiliary I/O device 928. Such composed items may then be transmitted over a communication network through the communication subsystem 911.

For voice communications, overall operation of mobile station 900 is similar, except that received signals would preferably be output to a speaker 934 and signals for transmission would be generated by a microphone 936. Alternative voice or audio I/O subsystems, such as a voice message recording subsystem, may also be implemented on mobile station 900. Although voice or audio signal output is preferably accomplished primarily through the speaker 934, display 922 may also be used to provide an indication of the identity of a calling party, the duration of a voice call, or other voice call related information for example.

Serial port 930 in Figure 7, would normally be implemented in a personal digital assistant (PDA)-type mobile station for which synchronization with a user's desktop computer (not shown) may be desirable, but is an optional device component. Such a port 930 would enable a user to set preferences through an external device or software application and would extend the capabilities of mobile station 900 by providing for information or software downloads to mobile station 900 other than through a wireless communication network. The alternate download path may for example be used to load an encryption key onto the device through a direct and thus reliable and trusted connection to thereby enable secure device communication.

Other communications subsystems 940, such as a short-range communications subsystem, is a further optional component which may provide for communication between mobile station 900 and different systems or devices, which need not necessarily be similar devices. For example, the subsystem 940 may include an infrared device and associated circuits and components or a Bluetooth™ communication module to provide for communication with similarly enabled systems and devices.

EXTENSIONS AND ALTERNATIVES

In the foregoing specification, the disclosure has been described with reference to specific embodiments thereof. It will, however, be evident that various modifications and changes may be made thereto without departing from the scope of the technique. The specification and drawings are, accordingly, to be regarded in an illustrative rather than a restrictive sense.

It is to be noted that the methods as described have shown actions being carried out in a particular order. However, it would be clear to a person skilled in the art that the order of the actions performed, where the context permits, can be varied and to that extent the ordering of the actions as described herein is not intended to be limiting.

It is also to be noted that where a method has been described it is also intended that protection is also sought for a device arranged to carry out the method and where features have been claimed independently of each other these may be used together with other claimed features.

Furthermore it will be noted that the apparatus described herein may comprise a single component such as a UE or UTRAN or other user equipment or access network components, a combination of multiple such components for example in communication with one another or a sub-network or full network of such components.

**Claims**

1. A method for reporting a signal strength indication from a first layer of a wireless communications device (100) to a second layer of the wireless communications device (100), the method comprising:

    measuring (202) and reporting (203) an initialization value of signal strength;
    periodically measuring (204) a current value of signal strength;
    determining (205) whether a change in signal strength meets a threshold criterion;
    reporting (206) the current value of signal strength as an update value of signal strength when the change in signal strength meets a threshold criterion;
    wherein the initialization value of signal strength is reported (203) upon:

        the wireless communications device (100) first camping on a cell following receipt of a camp request;
        cell reselection from a first radio access technology to a second radio access technology;
        hard handover from the first radio access technology to the second radio access technology; and
        cell change order from the first radio access technology to the second radio access technology.

2. A method as claimed in claim 1, wherein the threshold criterion is that the change in signal strength is greater than or equal to a threshold value.

3. A method as claimed in claim 2, wherein the threshold value is 3dBm.

4. A method as claimed in claim 1, wherein the first radio access technology is GSM.

5. A method as claimed in claim 1, wherein the second radio access technology is UMTS.

6. A method as claimed in claim 1. wherein when the wireless communications device (100) can communicate with a wireless communications network (119), the value of signal strength is the highest value of the set of instantaneous signal strengths measured on a particular channel of the or each cell (102) the wireless communications device (100) is in communication with.

7. A method as claimed in claim 6, wherein the value of signal power is measured using the Received Signal Code Power (RSCP) of the particular channel.

8. A method as claimed in claim 6, wherein the particular channel is the Primary Common Pilot Channel (Primary CPICH).

9. A method as claimed in claim 1, wherein the value of signal strength is determined to have a predefined value when the wireless communications device (100) cannot communicate with a wireless communications network (119).

10. A method as claimed in claim 1, wherein measuring (204) the current value of signal strength comprises measuring a raw value of signal strength and filtering the raw value of signal strength to obtain the current value of signal strength.

11. A method as claimed in claim 10, wherein the filtering of the raw value of signal strength comprises taking an average of the raw value of signal strength and a previously obtained filtered value of signal strength.

12. A method as claimed in claim 11, wherein the average is a weighted average using a weighting factor "a" as a multiplier of the raw value of signal strength and a weighting factor "1-a" as a multiplier of the previously obtained filtered value of signal strength.

13. A method as claimed in claim 12, wherein the weighting factor "a" is obtained from the discontinuous reception cycle length using a lookup table,

14. A method as claimed in claim 12, wherein the weighting factor "a" is determined by the communication state of the wireless communications device.

15. A method as claimed in claim 10, wherein the filtering is continued across an event which causes a step change in the value of the signal strength.

16. A method as claimed in claim 15, wherein the event for which a step change is expected is one of:

 a communication state transition of the wireless communications device (100);
 a cell handover,
 cell reselection when the wireless communications device (100) is in a bidirectional communication state using shared channels;
 cell reselection when the wireless communications device (100) is in a communication state having discontinuous reception;
 connection to a cell (102) in an active set having the highest instantaneous value of the received signal power of the cells in the new active set; and
 disconnection from the cell (102) in an active set having the highest instantaneous value of the received signal power of the cells in the active set.

17. A wireless communications device (100) having a first layer and a second layer, wherein the first layer is arranged to:

 measure (202) an initialization value of signal strength;
 report (203) the initialization value of signal strength to the second layer;
 periodically measure (204) a current value of signal strength;
 determine (205) whether a change in signal strength meets a threshold criterion;
 report (206) the current value of signal strength to the second layer as an update value of signal strength when the change in signal strength meets a threshold criterion;
 wherein the initialization value of signal strength is reported (203) upon:

  the wireless communications device (100) first camping on a cell following receipt of a camp request;
  cell reselection from a first radio access technology to a second radio access technology;
  hard handover from the first radio access technology to the second radio access technology; and

cell change order from the first radio access technology to the second radio access technology.

18. A computer program product comprising program code, the computer program product arranged to cause a first layer of a wireless communications device (100) to:

measure (202) an initialization value of signal strength;
report (203) the initialization value of signal strength to a second layer of the wireless communications device;
periodically measure (204) a current value of signal strength;
determine (205) whether a change in signal strength meets a threshold criterion;
report (206) the current value of signal strength to the second layer as an update value of signal strength when the change in signal strength meets a threshold criterion;
wherein the initialization value of signal strength is reported (203) upon:

the wireless communications device (100) first camping on a cell following receipt of a camp request;
cell reselection from a first radio access technology to a second radio access technology;
hard handover from the first radio access technology to the second radio access technology; and
cell change order from the first radio access technology to the second radio access technology.

**Patentansprüche**

1. Verfahren zum Berichten einer Signalstärkeanzeige von einer ersten Schicht einer drahtlosen Kommunikationsvor-rrichtung (100) an eine zweite Schicht der drahtlosen Kommunikationsvorrichtung (100), wobei das Verfahren aufweist:

Messen (202) und Berichten (203) eines Initialisierungswerts einer Signalstärke;
regelmäßiges Messen (204) eines aktuellen Werts einer Signalstärke;
Bestimmen (205), ob eine Änderung der Signalstärke ein Schwellenkriterium erfüllt;
Berichten (206) des aktuellen Werts der Signalstärke als einen Aktualisierungswert der Signalstärke, wenn die Änderung der Signalstärke ein Schwellenkriterium erfüllt;
wobei der Initialisierungswert der Signalstärke berichtet wird (203) bei:

einer ersten Zuordnung bzw. Campieren der drahtlosen Kommunikationsvorrichtung (100) zu einer Zelle nach einem Empfang einer Zuordnungs- bzw. Campieren-Anforderung;
einer Zellenneuauswahl von einer ersten Funkzugriffstechnologie zu einer zweiten Funkzugriffstechnologie;
einer harten Übergabe von der ersten Funkzugriffstechnologie zu der zweiten Funkzugriffstechnologie; und
einer Zellenänderungsanweisung von der ersten Funkzugriffstechnologie zu der zweiten Funkzugriffstechnologie.

2. Verfahren gemäß Anspruch 1, wobei das Schwellenkriterium ist, dass die Änderung der Signalstärke größer oder gleich einem Schwellenwert ist.

3. Verfahren gemäß Anspruch 2, wobei der Schwellenwert 3dBm ist.

4. Verfahren gemäß Anspruch 1, wobei die erste Funkzugriffstechnologie GSM ist.

5. Verfahren gemäß Anspruch 1, wobei die zweite Funkzugriffstechnologie UMTS ist.

6. Verfahren gemäß Anspruch 1, wobei, wenn die drahtlose Kommunikationsvorrichtung (100) mit einem drahtlosen Kommunikationsnetzwerk (119) kommunizieren kann, der Wert der Signalstärke der höchste Wert des Satzes von momentanen Signalstärken ist, die auf einem bestimmten Kanal der oder jeder Zelle (102) gemessen werden, mit der die drahtlose Kommunikationsvorrichtung (100) kommuniziert.

7. Verfahren gemäß Anspruch 6, wobei der Wert einer Signalleistung unter Verwendung von RSCP (Received Signal Code Power) des bestimmten Kanals gemessen wird.

8. Verfahren gemäß Anspruch 6, wobei der bestimmte Kanal der primäre CPICH (Primary Common Pilot Channel) ist.

9. Verfahren gemäß Anspruch 1, wobei der Wert der Signalstärke als ein vordefinierter Wert bestimmt wird, wenn die drahtlose Kommunikationsvorrichtung (100) nicht mit einem drahtlosen Kommunikationsnetzwerk (119) kommunizieren kann.

10. Verfahren gemäß Anspruch 1, wobei das Messen (204) des aktuellen Werts der Signalstärke aufweist ein Messen eines Rohwerts der Signalstärke und Filtern des Rohwerts der Signalstärke, um den aktuellen Wert der Signalstärke zu erlangen.

11. Verfahren gemäß Anspruch 10, wobei das Filtern des Rohwerts der Signalstärke aufweist ein Nehmen eines Durchschnitts des Rohwerts der Signalstärke und eines vorher erlangten gefilterten Werts der Signalstärke.

12. Verfahren gemäß Anspruch 11, wobei der Durchschnitt ein gewichteter Durchschnitt ist unter Verwendung eines Gewichtungsfaktors "a" als ein Multiplizierer des Rohwerts der Signalstärke und eines Gewichtungsfaktors "1-a" als ein Multiplizierer des vorher erlangten gefilterten Werts der Signalstärke.

13. Verfahren gemäß Anspruch 12, wobei der Gewichtungsfaktor "a" aus der "diskontinuierlicher Empfangszyklus"-Länge unter Verwendung einer Verweistabelle erlangt wird.

14. Verfahren gemäß Anspruch 12, wobei der Gewichtungsfaktor "a" durch den Kommunikationszustand der drahtlosen Kommunikationsvorrichtung bestimmt wird.

15. Verfahren gemäß Anspruch 10, wobei das Filtern fortgesetzt wird über ein Ereignis, das eine Schrittänderung in dem Wert der Signalstärke veranlasst.

16. Verfahren gemäß Anspruch 15, wobei das Ereignis, für das eine Schrittänderung erwartet wird, eines ist aus:

ein Kommunikationszustandsübergang der drahtlosen Kommunikationsvorrichtung (100);
eine Zellen-Übergabe;
eine Zellenneuauswahl, wenn die drahtlose Kommunikationsvorrichtung (100) in einem bidirektionalen Kommunikationszustand ist, unter Verwendung gemeinsamer Kanäle;
eine Zellenneuauswahl, wenn die drahtlose Kommunikationsvorrichtung (100) in einem Kommunikationszustand mit diskontinuierlichem Empfang ist;
Verbindung zu einer Zelle (102) in einem aktiven Satz, die den höchsten momentanen Wert der empfangenen Signalleistung der Zellen in dem neuen aktiven Satz hat; und
Trennung von der Zelle (102) in einem aktiven Satz, die den höchsten momentanen Wert der empfangenen Signalleistung der Zellen in dem aktiven Satz hat.

17. Drahtlose Kommunikationsvorrichtung (100), die eine erste Schicht und eine zweite Schicht hat, wobei die erste Schicht ausgebildet ist zum:

Messen (202) eines Initialisierungswerts einer Signalstärke;
Berichten (203) des Initialisierungswerts der Signalstärke an die zweite Schicht;
regelmäßigen Messen (204) eines aktuellen Werts der Signalstärke;
Bestimmen (205), ob eine Änderung der Signalstärke ein Schwellenkriterium erfüllt;
Berichten (206) des aktuellen Werts der Signalstärke als einen Aktualisierungswert der Signalstärke an die zweite Schicht, wenn die Änderung der Signalstärke ein Schwellenkriterium erfüllt;
wobei der Initialisierungswert der Signalstärke berichtet wird (203) bei:

einer ersten Zuordnung bzw. Campieren der drahtlosen Kommunikationsvorrichtung (100) zu einer Zelle nach einem Empfang einer Zuordnungs- bzw. Campieren-Anforderung;
einer Zellenneuauswahl von einer ersten Funkzugriffstechnologie zu einer zweiten Funkzugriffstechnologie;
einer harten Übergabe von der ersten Funkzugriffstechnologie zu der zweiten Funkzugriffstechnologie; und
einer Zellenänderungsanweisung von der ersten Funkzugriffstechnologie zu der zweiten Funkzugriffstechnologie.

18. Computerprogrammprodukt, das Programmcode aufweist, wobei das Computerprogrammprodukt ausgebildet ist, eine erste Schicht einer drahtlosen Kommunikationsvorrichtung (100) zu veranlassen zum:

Messen (202) eines Initialisierungswerts einer Signalstärke;
Berichten (203) des Initialisierungswerts der Signalstärke an eine zweite Schicht der drahtlosen Kommunikationsvorrichtung;
regelmäßigen Messen (204) eines aktuellen Werts der Signalstärke;
Bestimmen (205), ob eine Änderung der Signalstärke ein Schwellenkriterium erfüllt;
Berichten (206) des aktuellen Werts der Signalstärke als einen Aktualisierungswert der Signalstärke an die zweite Schicht, wenn die Änderung der Signalstärke ein Schwellenkriterium erfüllt;
wobei der Initialisierungswert einer Signalstärke berichtet wird (203) bei:

einer ersten Zuordnung bzw. Campieren der drahtlosen Kommunikationsvorrichtung (100) zu einer Zelle nach einem Empfang einer Zuordnungs- bzw. Campieren-Anforderung;
einer Zellenneuauswahl von einer ersten Funkzugriffstechnologie zu einer zweiten Funkzugriffstechnologie;
einer harten Übergabe von der ersten Funkzugriffstechnologie zu der zweiten Funkzugriffstechnologie; und
einer Zellenänderungsanweisung von der ersten Funkzugriffstechnologie zu der zweiten Funkzugriffstechnologie.

## Revendications

1. Procédé de transmission d'une indication d'intensité du signal entre une première couche d'un dispositif de communication sans fil (100) et une seconde couche du dispositif de communication sans fil (100), le procédé comprenant les étapes consistant à :

mesurer (202) et transmettre (203) une valeur d'initialisation de l'intensité du signal ;
mesurer périodiquement (204) une valeur courante de l'intensité du signal ;
déterminer (205) si un changement de l'intensité du signal répond à un critère de seuil ;
transmettre (206) la valeur courante de l'intensité du signal comme valeur de mise à jour de l'intensité du signal lorsque le changement de l'intensité du signal répond à un critère de seuil ;
dans lequel la valeur d'initialisation de l'intensité du signal est transmise (203) dans les situations suivantes :

premier stationnement du dispositif de communication sans fil (100) sur une cellule après la réception d'une demande de stationnement ;
nouvelle sélection d'une cellule après passage d'une première technologie d'accès radio à une seconde technologie d'accès radio ;
transfert complet entre la première technologie d'accès radio et la seconde technologie d'accès radio ; et ordre de changement de cellule entre la première technologie d'accès radio et la seconde technologie d'accès radio.

2. Procédé selon la revendication 1, dans lequel le critère de seuil est que le changement de l'intensité du signal soit égal ou supérieur à une valeur de seuil.

3. Procédé selon la revendication 2, dans lequel la valeur de seuil est de 3 dBm.

4. Procédé selon la revendication 1, dans lequel la première technologie d'accès radio est le GSM.

5. Procédé selon la revendication 1, dans laquelle la seconde technologie d'accès radio est l'UMTS.

6. Procédé selon la revendication 1, dans lequel, lorsque le dispositif de communication sans fil (100) peut communiquer avec un réseau de communication sans fil (119), la valeur de l'intensité du signal est la valeur la plus élevée de l'ensemble des intensités instantanées de signal mesurées sur un canal particulier de la cellule ou de chaque cellule (102) avec lesquelles le dispositif de communication sans fil (100) est en communication.

7. Procédé selon la revendication 6, dans lequel la valeur de l'intensité du signal est mesurée en utilisant le signal RSCP (pour « *Received Signal Code Power* » - Code d'intensité du signal reçu) du canal particulier.

8. Procédé selon la revendication 6, dans lequel le canal particulier est le canal CPICH primaire (pour « *Primary Common Pilot Channel* »).

9. Procédé selon la revendication 1, dans lequel il est déterminé que la valeur de l'intensité du signal possède une valeur prédéfinie lorsque le dispositif de communication sans fil (100) ne peut pas communiquer avec un réseau de communication sans fil (119).

10. Procédé selon la revendication 1, dans lequel l'étape de mesure (204) de la valeur courante de l'intensité du signal comprend les étapes consistant à mesurer une valeur brute de l'intensité du signal et à filtrer la valeur brute de l'intensité du signal pour obtenir la valeur courante de l'intensité du signal.

11. Procédé selon la revendication 10, dans lequel l'étape de filtrage de la valeur brute de l'intensité du signal comprend l'étape consistant à calculer une moyenne de la valeur brute de l'intensité du signal et d'une valeur filtrée de l'intensité du signal obtenue précédemment.

12. Procédé selon la revendication 11, dans lequel la moyenne est une moyenne pondérée utilisant un facteur de pondération « a » comme multiplicateur de la valeur brute de l'intensité du signal et un facteur de pondération « 1 - a » comme multiplicateur de la valeur filtrée de l'intensité du signal obtenue précédemment.

13. Procédé selon la revendication 12, dans lequel le facteur de pondération « a » est obtenu à partir de la longueur du cycle de réception discontinue, en utilisant une table de consultation.

14. Procédé selon la revendication 12, dans lequel le facteur de pondération « a » est déterminé par l'état de communication du dispositif de communication sans fil.

15. Procédé selon la revendication 10, dans lequel l'étape de filtrage se poursuit après un événement qui commande un changement brutal de la valeur de l'intensité du signal.

16. Procédé selon la revendication 15, dans lequel l'événement dont on attend un changement brutal est l'un des suivantes :

transition de l'état de communication du dispositif de communication sans fil (100) ;
transfert entre cellules ;
nouvelle sélection de la cellule lorsque le dispositif de communication sans fil (100) est dans un état de communication bidirectionnelle à l'aide de canaux partagés ;
nouvelle sélection de la cellule lorsque le dispositif de communication sans fil (100) se trouve dans un état de communication avec réception discontinue ;
connexion à une cellule (102) dans un ensemble actif ayant la valeur instantanée la plus élevée d'intensité du signal reçu parmi les cellules du nouvel ensemble actif.
déconnexion d'une cellule (102) dans un ensemble actif ayant la valeur instantanée la plus élevée d'intensité du signal reçu parmi les cellules de l'ensemble actif.

17. Dispositif de communication sans fil (100) possédant une première couche et une seconde couche, dans lequel la première couche est conçue pour :

mesurer (202) une valeur d'initialisation de l'intensité du signal ;
transmettre (203) la valeur d'initialisation de l'intensité du signal à la seconde couche ;
mesurer périodiquement (204) une valeur courante de l'intensité du signal ;
déterminer (205) si un changement de l'intensité du signal répond à un critère de seuil ;
transmettre (206) la valeur courante de l'intensité du signal à la seconde couche comme valeur de mise à jour de l'intensité du signal lorsque le changement de l'intensité du signal répond à un critère de seuil ;
dans lequel la valeur d'initialisation de l'intensité du signal est transmise (203) dans les situations suivantes :

premier stationnement du dispositif de communication sans fil (100) sur une cellule après la réception d'une demande de stationnement ;
nouvelle sélection d'une cellule après passage d'une première technologie d'accès radio à une seconde technologie d'accès radio ;
transfert complet entre la première technologie d'accès radio et la seconde technologie d'accès radio ; et
ordre de changement de cellule entre la première technologie d'accès radio et la seconde technologie d'accès radio.

**18.** Progiciel d'ordinateur comprenant du code de programme, le progiciel d'ordinateur étant conçu pour commander à une première couche d'un dispositif de communication sans fil (100) de :

mesurer (202) une valeur d'initialisation de l'intensité du signal ;
transmettre (203) la valeur d'initialisation de l'intensité du signal à la seconde couche du dispositif de communication sans fil ;
mesurer périodiquement (204) une valeur courante de l'intensité du signal ;
déterminer (205) si un changement de l'intensité du signal répond à un critère de seuil ;
transmettre (206) la valeur courante de l'intensité du signal à la seconde couche comme valeur de mise à jour de l'intensité du signal lorsque le changement de l'intensité du signal répond à un critère de seuil ;
dans lequel la valeur d'initialisation de l'intensité du signal est transmise (203) dans les situations suivantes :

premier stationnement du dispositif de communication sans fil (100) sur une cellule après la réception d'une demande de stationnement ;
nouvelle sélection d'une cellule après passage d'une première technologie d'accès radio à une seconde technologie d'accès radio ;
transfert complet entre la première technologie d'accès radio et la seconde technologie d'accès radio ; et
ordre de changement de cellule entre la première technologie d'accès radio et la seconde technologie d'accès radio.

Fig. 1

Fig. 2

Fig. 3

Fig. 4

| F(n-1) | Rscp | $(1-a) \cdot F(n-1)$ $+ a \cdot Rscp$ | Fn |
|---|---|---|---|
| - | -70.0 | - | -70.0 |
| -70.0 | -72.0 | -71.0 | -71.0 |
| -71.0 | -75.0 | -73.0 | -73.0 |
| -73.0 | -80.0 | -76.5 | -76.5 |
| -76.5 | -80.0 | -78.3 | -78.3 |
| -78.3 | -70.0 | -74.1 | -74.1 |
| -74.1 | -80.0 | -77.1 | -77.1 |
| -77.1 | -80.0 | -78.5 | -78.5 |
| -78.5 | -70.0 | -74.3 | -74.3 |
| -74.3 | -80.0 | -77.1 | -77.1 |
| -77.1 | -90.0 | -83.6 | -83.6 |
| -83.6 | -50.0 | -66.8 | -66.8 |
| -66.8 | -40.0 | -53.4 | -53.4 |
| -53.4 | -40.0 | -46.7 | -46.7 |
| -46.7 | -40.0 | -43.3 | -43.3 |
| -43.3 | -48.0 | -45.7 | -45.7 |
| -45.7 | -52.0 | -48.8 | -48.8 |
| -48.8 | -65.0 | -56.9 | -56.9 |
| -56.9 | -65.0 | -61.0 | -61.0 |

Fig. 5A

Fig. 5B

| F(n-1) | Rscp | (1-a) . F(n-1) + a . Rscp | Fn |
|---|---|---|---|
| - | -70.0 | - | -70.0 |
| -70.0 | -72.0 | -71.6 | -71.6 |
| -71.6 | -75.0 | -74.3 | -74.3 |
| -74.3 | -80.0 | -78.9 | -78.9 |
| -78.9 | -80.0 | -79.8 | -79.8 |
| -79.8 | -70.0 | -72.0 | -72.0 |
| -72.0 | -80.0 | -78.4 | -78.4 |
| -78.4 | -80.0 | -79.7 | -79.7 |
| -79.7 | -70.0 | -71.9 | -71.9 |
| -71.9 | -80.0 | -78.4 | -78.4 |
| -78.4 | -90.0 | -87.7 | -87.7 |
| -87.7 | -50.0 | -57.5 | -57.5 |
| -57.5 | -40.0 | -43.5 | -43.5 |
| -43.5 | -40.0 | -40.7 | -40.7 |
| -40.7 | -40.0 | -40.1 | -40.1 |
| -40.1 | -48.0 | -46.4 | -46.4 |
| -46.4 | -52.0 | -50.9 | -50.9 |
| -50.9 | -65.0 | -62.2 | -62.2 |
| -62.2 | -65.0 | -64.4 | -64.4 |

Fig. 6A

Fig. 6B

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080082180 A
- US 20040229659 A